# EUROPÄISCHE PATENTANMELDUNG

(11) **EP 3 912 472 A1**
(43) Veröffentlichungstag der Anmeldung: **24.11.2021**
(21) Anmeldenummer: 21000129.3
(22) Anmeldetag: 11.05.2021
(51) Int. Cl.: A21D 13/066, A21D 10/00, A23L 33/20, A23L 33/21, A23L 33/00, A21D 2/36, A21D 13/04, A21D 13/062, A23L 25/00

(54) **GLUTEN-FREIE BACKMISCHUNG ENTHALTEND GOLDLEINSAMENMEHL UND FLOHSAMENSCHALENMEHL, SOWIE VERFAHREN ZUR ZUBEREITUNG EINES TEIGES HIERAUS**

(30) Priorität: 11.05.2020 DE 102020112734
(71) Anmelder: Foodpunk GmbH, 85579 Neubiberg (DE)
(72) Erfinder: Lommel, Marina, 85579 Neubiberg (DE)
(74) Vertreter: Rössig, Rolf

(57) **Zusammenfassung**

Die Erfindung bezieht sich auf eine Backmischung zur Zubereitung eines Teiges für brotähnliche Backwaren. Weiterhin bezieht sich die Erfindung auch auf ein Verfahren zur Zubereitung eines Teiges aus der genannten Backmischung sowie auch ein gemäß dieser Mischung gebackenes Gebäck, insbesondere Brot. Die Erfindung schafft eine Teigmischung zur Zubereitung brotartig anmutender Backwaren, umfassend Goldleinsamenmehl und Flohsamenschalenmehl, sowie weitere Zugaben, wobei das Goldleinsamenmeht und das Flohsamenschalenmehl eine Gewichtsfraktion der Backmischung im Bereich von 25 bis 40 % bilden, und Innerhalb dieser Gewichtsfraktion der Anteil des Goldleinsamenmehl dem Anteil des Flohsamenschalenmehls entspricht oder darunter liegt. Aus dieser Backmischung werden dann auch ein Teig und ein Brot.

## Beschreibung

Die Erfindung bezieht sich auf eine Backmischung zur Zubereitung eines Teiges für brotähnliche Backwaren. Welterhin bezieht sich die Erfindung auch auf ein Verfahren zur Zubereitung eines Teiges aus der genannten Backmischung sowie auch ein gemäß dieser Mischung gebackenes Gebäck, Insbesondere Brot.

Backmischungen für Brotwaren enthalten überwiegend stärkehaltige Mehle. Die Zubereitung des Teiges erfolgt durch Zugabe von Wasser zu diesen üblicherweise zunächst als Pulvermischung erscheinenden Backmischungen, sowie Rühren und Kneten des sich hierbei ergebenden plastischen Teiges. Soweit der entsprechende Teig Hefe enthält, entwickelt sich der backfähige Teig im Rahmen einer sog. Gehzeit.

Klassisches Brot enthält in der Regel Weizen- und/oder Roggenmehl und wird mit Sauerteig oder Hefe getrieben. Gluten aus dem Mehl ist ein essentiell wichtiger Bestandteil für die Konsistenz von klassischem Brot. Die Definition für Brot nach den "Leitsätzen für Brot und Kleingebäck" lautet: .Brot wird ganz oder teilweise aus Getreide und/oder Getreideerzeugnissen, meist nach Zugabe von Flüssigkeit, sowie von anderen Lebensmitteln (z. B. Leguminosen-, Kartoffelerzeugnisse) in der Regel durch Kneten, Formen, Lockem, oder Backen des Brotteiges hergestellt. Brot enthält weniger als 10 Gewichtsteile Fett und/oder Zuckerarten auf 90 Gewichtsteile) Getreide und/oder Getreideerzeugnisse."

### Aufgabe der Erfindung

Der Erfindung liegt die Aufgabe zugrunde, eine Teigmischung zu schaffen, die der Zubereitung eines Teiges für gustatorisch hochwertige brotähnlich erscheinende Backwaren dient und deren Verarbeitung sich gegenüber bisherigen Herangehensweisen als vorteilhaft darstellt. Weiterhin liegt der Erfindung auch die Aufgabe einen entsprechenden Teig, sowie auch ein entsprechendes Brot zu schaffen.

### Erfindungsgemäße Lösung

Die oben genannte Aufgabe wird erfindungsgemäß gelöst durch eine Teigmischung zur Zubereitung brotartig anmutender Backwaren, umfassend Goldleinsamenmehl und Flohsamenschalenmehl, sowie weitere Zugaben, wobei das Goldlainsamenmehl und das Flohsamenschalenmehl eine Gewichtsfraktion der Backmischung im Bereich von 25 bis 40 % bilden, und innerhalb dieser Gewichtsfraktion der Anteil des Goldleinsamenmehl dem Anteil des Flohsamenschalenmehls entspricht oder darunter liegt.

Bei der erfindungsgemäßen Backmischung liegt vorzugsweise der Gewichtsanteil des Flohsamenschalenmehls an der Backmischung im Bereich von 11 bis 19 %, insbesondere bei 16,3 %.

Bei der erfindungsgemäßen Backmischung liegt vorzugsweise der Gewichtsantell des Goldleinsamenmehls an der Backmischung im Bereich von 10 bis 18 %, insbesondere bei 15,4 %.

Vorzugsweise umfasst die Backmischung Kokosmehl und der Gewichtsanteil des Kokosmehles an der Backmischung liegt im Bereich von 5 bis 10 %, insbesondere bei 8,56 %.

Vorzugsweise umfasst die Backmischung auch Zitrusfaser und der Gewichtsanteil der Zltrusfaser an der Backmischung liegt im Bereich von 2 bis 4 %, insbesondere bei 3,3 %.

Die Backmischung umfasst weiterhin vorzugsweise auch Eiklarpulver und der Gewichtsanteil des Eiklarpulvers an der Backmischung liegt im Bereich von 6 bis 11 %, insbesondere bei 8 %.

Hanfsamen bildet ebenfalls vorzugsweise einen Bestandteil der Backmischung und der Gewichtsanteil des Hanfsamens an der Backmischung liegt vorzugsweise im Bereich von 15 bis 25 %, insbesondere bei 20 %.

Ein besonders hoher vorzugsweise in der Backmischung enthaltener Anteil umfasst Kürbiskeme und der Gewichtsanteil der Kürbiskeme an der Backmischung liegt dabei vorzugsweise im Bereich von 15 bis 25 %, insbesondere bei 20 %.

Die Backmischung enthält vorzugsweise auch Kaliumtartrat (= Weinstein), Natriumhydrogencarbonat (= Natron), Delta-Gluconolacton und Salz.

Hinsichtlich eines Verfahrens zur Zubereitung eines Teiges wird die eingangs genannte Aufgabe gelöst durch Verwendung der oben beschriebenen Backmischung, wobei dieser im Rahmen eines Mischschrittes Wasser und/oder Olivenöl als zusätzliche und von der prozentualen Angabe nicht eingeschlossene Medien zugegeben wird.

Die Erfindung umfasst auch ein Brot oder eine Backware, das bzw. die nach Maßgabe der im vorliegenden Gesamtkontext offenbarten Teigmischung, sowie des Verfahrens zur Zubereitung eines Teiges gefertigt, insbesondere gebacken ist.

Vorzugsweise besteht eine für den Verbraucher vorbereitete Rezeptur der Backmischung pro 1 kg Backmischung aus:
85,6 g Kokosmehl
154 g Goldleinsamenmehl, entölt
163 g Flohsamenschalenmehl
33 g Zitrusfaser
80 g Eiklarpulver
22,2 g Kaliumtartrat
20 g Natriumhydrogencarbonat
22,2 g Delta-Gluconolacton
20 g Salz
200 g Hanfsamen, geschält
200 g Kürbiskerne

Die Rezeptur für ein fertiges Brot umfasst dann:
1 kg Backmischung (s. oben)
1.100 - 1.200 g Wasser
120 g Olivenöl

Bei einer derartigen Backmischung ergeben sich folgende Werte:

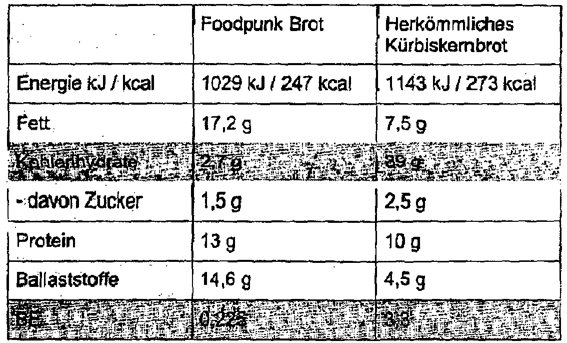

### Zubereitung:

Für die Backmischung werden alle Zutaten bis auf Kürbiskerne und Hanfsamen vorgemischt. Der Hanfsamen und die Kürbiskeme werden als separate Fraktionen bereitgestellt und erst unmittelbar vor der Zubereitung des Teiges hinzugeben.

Um zum backreifen Teig zu gelangen werden Wasser und Olivenöl in den Teig unter Kneten eingegeben. Das Vermengen erfolgt zügig und der Teig wird ohne Gehen unmittelbar für 60 Minuten im vorgeheizten Backofen bei 200 °C gebacken.

Reguläres Brot muss gehen. Das erfindungsgemäße Brot kann ohne Wartezeit gebacken werden. Es muss nicht gehen. Das erfindungsgemäße Brot bietet folgende Ernährungsphysiologische und medizinische Vorteile:
- reduzierter Kohlenhydratgehalt
- für Diabetiker geeignet
- für die ketogene Ernährung geeignet
- glutenfrei
- für Zöliakiepatienten geeignet
- weizenfrei und insgesamt getreidefrei
- für Allergiker und emährungsbewusste Menschen geeignet
- proteinreich, ballaststoffreich -> gute Sättigung
- Quelle für Omega-3-Fettsäuren

Das erfindungsgemäße Brot ist speziell für Menschen mit besonderen Emährungsanforderungen geeignet. Es enthält unter 3 % verwertbare Kohlenhydrate, während konventionelles Brot 40 % und mehr enthält. Aus diesem Grund ist es ideal für Diabetiker geeignet. Diabetiker, die insulinpflichtig sind, berechnen die benötigte Insulindosis anhand von Broteinheiten (BE). Das erfindungsgemäße Brot enthält nur 0,225 BE statt 3,3 BE.

Das erfindungsgemäße Brot Ist auch für Menschen geeignet, die eine ketogene Ernährung verfolgen. Es enthält deutlich weniger Kohlenhydrate und etwas mehr Fett als konventionelles Brot, was es zu einem idealen Lebensmittel in der Keto-Ernährung macht, bei der das Risiko besteht, dass dort Ballaststoffe in unzureichendem Maße präsent sind.

Das erfindungsgemäße Brot enthält vorzugsweise kein Getreide und damit keine glutenhaltrgen Bestandteile. Ein Verzicht auf Gluten ist für Zöliakie-Patienten unerlässlich. Weizenallergiker müssen auf die verbreitete Getreidesorte Weizen verzichten.

Für Menschen, die aus gesundheitlichen Gründen eine spezielle Diät verfolgen, ist die Auswahl an Backwaren verschwindend gering, wobei insbesondere im Bereich der stark kohlenhydratreduzierten Backwaren das Angebot gering ist. Die meisten Low Carb Backwaren setzen Gluten als Bindemittel ein und schließen somit Zöliakiepatienten aus.

Neben Menschen, die aus gesundheitlichen Gründen eine besondere individuelle Speisenzusammenstellung vornehmen müssen, ernähren sich eine Vielzahl an Menschen freiwillig kohlenhydratarm und glutenfrei. Ziel ist zum Beispiel eine höhere Fitness, Gewichtsabnahme oder gesündere Ernährung.

Das erfindungsgemäße Brot spricht diese Ziele an, da es besonders kohlenhydratreduziert ist, aber auch proteinreich und ballaststoffreich und auf diese Weise eine gute und langanhaltende Sättigung verursacht.

Die Deutsche Gesellschaft für Ernährung empfiehlt Erwachsenen 30 g Ballaststoffe pro Tag. Nach Daten der Nationalen Verzehrstudie II weisen 75 % der Frauen und 68 % der Männer eine Ballaststoffzufuhr unter dem Richtwert von mindestens 30 g pro Tag auf. Die Zufuhr liegt bei 25 g (Männer) bzw. 23 g (Frauen) pro Tag. Wer viele Ballaststoffe verzehrt, hat ein verringertes Risiko für zahlreiche ernährungsmitbedingte Krankheiten, insbesondere für Adipositas, Bluthochdruck und koronare Herzkrankheit (KHK). Lösliche Ballaststoffe, z. B. enthalten in der erfindungsgemäß vorzugsweise vorgesehenen Zutat Zitrusfaser, senken ebenfalls das Risiko für Fettstoffwechselstörungen.

Der im erfindungsgemäßen Brot enthaltene Anteil an Leinsamen und Hanfsamen liefert Omega-3-Fettsäuren.

Das erfindungsgemäße Brot ist eine Backware mit äußerlich brotähnlichem Charakter und dient als Brotersatz auf dem Speiseplan. Es unterscheidet sich technologisch komplett von der Herstellung gängigen Brotes.

Obwohl das erfindungsgemäße Brot keinerlei Gluten enthält, weist es eine elastische Konsistenz auf und hat nach dem Backen eine Konsistenz wie klassisches Brot Anderes glutenfreies Brot ist häufig sehr brüchig. Es weist eine weiche Krume und knusprige Kruste auf, auch Eigenschaften, für die normalerweise Gluten nötig ist. Daneben enthält es fein verteilte Poren, für die normalerweise der Einsatz von Sauerteig oder Hefe erforderlich wäre. Sowohl Sauerteig als auch Hefe können bei einem Verzicht auf Kohlehydrate jedoch gerade nicht eingesetzt werden, da die Mikroorganismen in Sauerteig oder Hefe Zucker / Kohlenhydrate als Nahrung benötigen. Darum sind Low Carb Brote häufig sehr kompakt und nicht locker, wie das erfindungsgemäße Brot. In vielen Low Carb Produkten behilft man sich, indem man reines Gluten (Weizenkleber) hinzugibt Dieser Inhaltsstoff ist kohlenhydratarm, da er aus Weizenmehl isoliert wurde. Das erfindungsgemäße Konzept schafft es, ein Brot ohne Gluten und fast ohne Kohlenhydrate bereitzustellen, das trotz der Schwierigkeit, dass klassische Triebmittel nicht eingesetzt werden können, sehr gut aufgeht und locker ist.

Vor dem Backen unterscheidet sich der Teig stark von klassischem Brotteig. Er ist dabei nicht elastisch, sondern eher klebrig.

Der Verzicht auf Gluten wird gemäß einem besonderen Aspekt der vorliegenden Erfindung durch die Kombination von Leinsamenmehl, Eiklarpulver und Flohsamenschalenmehl kompensiert. Die Quellfähigkeit des Weizenmehls wird ersetzt durch die Wirkung des Kokosmehls und der Zitrusfaser. Das Aufgehen des Teiges wird durch ein zweistufig aktiviertes Backtriebmittel erzielt.

Weitere Zutaten, wie Salz, Kürbiskerne und Hanfsamen dienen dem Geschmack und Veredelung. Die Samen und Kerne liefern zusätzlich Biss und ungesättigte Fettsäuren (z.B. Omega-3) sowie Protein. Die Zutaten zur Veredelung können je nach Sorte variiert werden.

Flohsamenschalen zeichnen sich zum einen durch die hohe Wasserbindefähigkeit aus, zum anderen durch die Klebeeigenschaft und Strukturgebung. Spezielle Ballaststoffverbindungen in den Flohsamenschalen bilden bei Kontakt mit Wasser eine klare, gelartige Verbindung. Flohsamenschalen sind maßgeblich für die Strukturgebung des Brotes und in diesem Hinblick die wichtigste Zutat für das Gelingen ohne Gluten.

Goldleinsamenmehl, insbesondere entöltes Leinsamenmehl (auch Leinprotein) ist ein Beiprodukt der Leinölproduktion. Es handelt sich um den Presskuchen, der bei der Ölherstellung übrig bleibt. Dieser wird fein vermahlen, ist fettärmer als Leinsamen an sich, proteinreicher und hat eine gute Wasserbindefähigkeit. Leinsamen bilden in Wasser eine geleeartige Konsistenz, was der Bindung des Brotes zuträglich ist. Leinsamen führen also nicht nur zu Wasserbindung, sondern auch zu Elastizität des Produkts. Goldleinsamenmehl ist in Bezug auf die Strukturgebung und Bindung ohne Gluten die zweitwichtigste Zutat unseres Produkts. Flohsamenschalen alleine ergeben eine zu leichte Struktur, ein Brot mit einem zu hohen Anteil an Flohsamenschalenmehl hat zwar eine gute Bindung und geht gut auf, erinnert aber eher an Pappmaschee. Goldleinsamenmeht liefert eine andere Art der Bindung und gibt dem Brot auch eine gewisse Schwere, die gewünscht ist.

Das in der Backmischung enthaltene Kokosmehl bindet erhöht Wasser, schafft Konsistenz, ist aber kein guter "Kleber" für Teige. Es dient dazu, dem Brot wieder etwas mehr Schwere, Saftigkeit und Biss zu geben. Es ist ein Beiprodukt der Kokosölhersteilung.

Die Zitrusfaser dient der Verdickung des Teiges, Wasserbindung und zum Ersatz von Stärke aus Getreide.

Eiklarpulver oder Eiklar ermöglicht zusätzlich Bindung, erhöht den Proteingehalt des Brotes und die Saftigkeit.

Durch den höheren Anteil an Protein, stammend aus den verschiedenen Nuss- und Saalenmehlen sowie dem Eiklar, bleibt das Brot länger saftig und frisch, da das Protein die Feuchtigkeit bindet.

Goldleinsamenmehl, Eiklar und Flohsamenschalen in Kombination ergeben eine gewünschte sehr krosse Kruste nach dem Backen und nach dem Toasten.

Klassische Triebmittel werden vorzugsweise nicht verwendet, da sowohl Hefe als auch die Mikroorganismen in Sauerteig Kohlenhydrate als Substrat erfordern. Klassisches Backpulver ist in der Regel mit Maisstärke vermengt und daher auch vorzugsweise ausgeschlossen.

Als Backtriebmittel kommt vorzugsweise eine 3er-Kombination von Komponenten zum Einsatz: Kaliumtartrat (= Weinstein), Natriumhydrogencarbonat (= Natron) und Delta-Gluconolacton.

Hierbei ist insbesondere die Kombination von Weinstein und Natron mit Delta-Gluconolacton neu.

Um die Triebkraft zu verbessern kann in vorteilhafter Weise als dritte Komponente Delta-Gluconolacton (GDL) eingesetzt werden, ein zweites Säuerungsmittel, das wie auch Weinstein mit Natron reagieren kann. Bei Kontakt mit Wasser wird GDL teilweise zu Gluconsäure hydrolisiert. Die Gluconsäure reagiert mit Natron und bildet dann CO2. Die Hydrolyse von Gluconsäure steigt bei höheren Temperaturen an, weshalb das Brot auch im Backofen noch weiter aufgeht.

Im Prinzip kann in vorteilhafter Weise durch die zwei Säuerungsmittel Weinstein und Gluconsäure ein zweistufig aktiviertes Backtriebmittel eingesetzt werden, das auf diese Weise extra triebstark ist und so einen schwereren brotähnlichen Teig treiben kann.

Weiterhin können in vorteilhafter Weise auch Transglutaminase und Hydroxymethylpropylcellulose eingesetzt werden wodurch der Teig und Kruste in vorteilhafter Weise weiter verfeinert werden können.

## Patentansprüche

1. Teigmischung zur Zubereitung brotartig anmutender Backwaren, umfassend Goldleinsamenmehl und Flohsamenschalenmehl, sowie weitere Zugaben, wobei das Goldleinsamenmehl und das Flohsamenschalenmehl eine Gewichtsfraktion der Backmischung im Bereich von 25 bis 40 % bilden, und innerhalb dieser Gewichtsfraktion der Anteil des Goldleinsamenmehl dem Anteil des Flohsamenschalenmehls entspricht oder darunter liegt.

2. Teigmischung nach Anspruch 1, **dadurch gekennzeichnet, dass** der Gewichtsanteil des Flohsamenschalenmehls an der Backmischung im Bereich von 11 bis 19 %, insbesondere bei 16,3 % liegt.

3. Teigmischung nach Anspruch 1 oder 2, **dadurch gekennzeichnet, dass** der Gewichtsanteil des Goldleinsamenmehls an der Backmischung im Bereich von 10 bis 18 %, insbesondere bei 15,4 % liegt.

4. Teigmischung nach wenigstens einem der Ansprüche 1 bis 3, **dadurch gekennzeichnet, dass** die Backmischung Kokosmehl umfasst und der Gewichtsanteil des Kokosmehles an der Backmischung im Bereich von 5 bis 10 %, insbesondere bei 8,56 % liegt.

5. Teigmischung nach wenigstens einem der Ansprüche 1 bis 4, **dadurch gekennzeichnet, dass** die Backmischung Zitrusfaser umfasst und der Gewichtsanteil der Zitrusfaser an der Backmischung im Bereich von 2 bis 4 %, insbesondere bei 3,3 % liegt.

6. Teigmischung nach wenigstens einem der Ansprüche 1 bis 5, **dadurch gekennzeichnet, dass** die Backmischung Kaliumtartrat (= Weinstein), Natriumhydrogencarbonat (= Natron), Delta-Gluconolacton und Salz umfasst.

7. Teigmischung nach wenigstens einem der Ansprüche 1 bis 6, **dadurch gekennzeichnet, dass** die Backmischung Eiklarpulver umfasst und der Gewichtsanteil des Eiklarpulvers an der Backmischung im Bereich von 6 bis 11 %, insbesondere bei 8 % liegt.

8. Teigmischung nach wenigstens einem der Ansprüche 1 bis 7, **dadurch gekennzeichnet, dass** die Backmischung Hanfsamen umfasst und der Gewichtsanteil des Hanfsames an der Backmischung im Bereich von 15 bis 25 %, insbesondere bei 20 % liegt.

9. Teigmischung nach wenigstens einem der Ansprüche 1 bis 8, **dadurch gekennzeichnet, dass** die Backmischung Kürbiskerne umfasst und der Gewichtsanteil der Kürbiskerne an der Backmischung im Bereich von 15 bis 25 %, insbesondere bei 20 % liegt.

10. Verfahren zur Zubereitung eines Teiges unter Verwendung der Backmischung nach wenigstens einem der Ansprüche 1 bis 9, bei welchem im Rahmen eines Anmischschrittes der Backmischung dieser Wasser und/oder Olivenöl zugegeben wird.

11. Brot das unter Einsatz einer Teigmischung nach wenigstens einem der Ansprüche 1 bis 9 oder eines Teiges nach Anspruch 10 zubereitet ist.
